(19)

Europäisches
Patentamt
European
Patent Office
Office européen
des brevets

(11) **EP 2 152 459 B1**

(12) **EUROPEAN PATENT SPECIFICATION**

(45) Date of publication and mention
of the grant of the patent:
**22.06.2011 Bulletin 2011/25**

(51) Int Cl.:
***B23F 21/22*** *(2006.01)*

(21) Application number: **08767643.3**

(22) Date of filing: **07.05.2008**

(86) International application number:
**PCT/US2008/005870**

(87) International publication number:
**WO 2008/140723 (20.11.2008 Gazette 2008/47)**

(54) **TOOL FOR IMPROVED CHIP FLOW**

WERKZEUG FÜR VERBESSERTEN CHIP-FLUSS

OUTIL POUR UN ÉCOULEMENT DE COPEAUX AMÉLIORÉ

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **10.05.2007 US 928611 P**

(43) Date of publication of application:
**17.02.2010 Bulletin 2010/07**

(73) Proprietor: **THE GLEASON WORKS
Rochester
New York 14692-2970 (US)**

(72) Inventors:
• **STADTFELD, Hermann, J.
Webster, NY 14580 (US)**
• **VOSSLER, Alan, E.
Fairport, NY 14450 (US)**

(74) Representative: **Leinweber & Zimmermann
European Patent Attorneys
Patentanwälte
Rosental 7
80331 München (DE)**

(56) References cited:
**DE-A1-102005 058 536     US-A- 5 662 514
US-B1- 6 311 590**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This application is related to U.S. Provisional Patent Application No. 60/928,611 filed May 10, 2007.

## Field of the Invention

The present invention is directed to cutting tools for manufacturing bevel gears and in particular to cutting tools with enhanced chip flow capabilities.

## Background of the Invention

In the manufacture of bevel and hypoid gears with curved flank lines, the cutting tools utilized are primarily face mill or face hob cutters. The cutters generally comprise cutting blades formed from a length of bar stock material (e.g. high-speed steel or carbide) having a base or shank portion and a cutting end portion, including at least one cutting edge, at one end, or at both ends, of the base or shank. A plurality of cutting blades are usually arranged about a cutter head with the cutting ends of the blades projecting from a face of the cutter head. Such types of cutting tools are well known in the art of gear manufacture.

In face mill cutters, a plurality of cutting blades are arranged about a circle in a cutter head such that one tooth slot is formed with each plunge of the cutter and the cutter must be withdrawn and the workpiece indexed to the next tooth slot position in order to form the next tooth slot (i.e. intermittent indexing). Face milling cutters usually comprise alternating inside and outside cutting blades that cut, respectively, inside and outside portions of a tooth slot. Face mill cutters may also comprise successive cutting blades that remove stock material from the entire tooth slot, such as is disclosed in US 1,236,834 to Gleason, US 1,667,299 to Wildhaber or US 2007/0011855 to Ribbeck. If desired, one or more "bottom" cutting blades may be included for removal of stock material from the bottom or root portion of a tooth slot.

Face hobbing comprises cutting blades arranged about a cutter, not in line with each other, but in groups, with usually two or three cutting blades per group. In two-blade groups, such as disclosed by U.S. Patents Nos. 4,575,285 to Blakesley; 4,621,954 to Kitchen et al. and 4,525,108 to Krenzer, the blade pair comprises an inner cutting blade and an outer cutting blade. In the three-blade group, such as disclosed by U.S. Patent No. 3,760,476 to Kotthaus, a "bottom" cutting blade is included along with an inside and outside cutting blade. Unlike most face milling processes, in which all cutting blades pass through the tooth slot during its formation, face hobbing comprises each successive group of cutting blades passing through respective successive tooth slot with each blade in the group forming a cut completely along the longitudinal portion of the tooth slot. The cutter and the workpiece rotate in a timed relationship with each other thereby allowing continual indexing of the workpiece and continual formation of each tooth slot of the gear. Thus, in face hobbing, a single plunge of the cutting tool results in all tooth slots of the workpiece being formed (i.e. continuous indexing).

Cutting blades may be made of any suitable tool material such as conventional or powered metal hardened high speed steel (HSS) of any alloy composition (such as, for example, M2, M4, Rex 45, Rex 54, Rex 76, T15, Rex 121 or others) or made of carbide hard metal of any alloy composition, such as P and K grades. The wear surfaces of cutting blades may be coated (and recoated after sharpening) with PVD single or multi-layer coatings consisting of any commercially available wear coating or combination of wear coatings such as, for example, TiN, TiCN, TiAlN, AlTiN, CrAlN, ZrN, CrN and others. Gear cutting operations may be performed utilizing a coolant or lubricant (i.e. wet cutting) or may be carried out in the absence of any such coolant or lubricant (i.e. dry cutting). Dry cutting operations are usually performed utilizing cutting blades comprising carbide materials. In general, the speed of such dry cutting along with the volume of chip removal per unit time is significantly higher than that achieved by wet cutting processes utilizing HSS materials.

As mentioned above, the volume of chip removal per time unit in high speed dry cutting is significantly higher as compared to wet cutting with high speed steel (e.g. 2 to 5 times). Chips can stay in the gap between two successive cutting blades and may eventually get positioned between a blade clearance edge and a tooth flank surface in the next cut which can cause a bad surface finish, chip welding and/or blade damage. If chips stay in the gap, it is also possible that such chips prevent new chips formed during the following cutting actions from leaving the gap which can lead to an accumulation of chips in the observed gap. The more chips that accumulate, the more they compress one another until the gap is packed with a tight bundle of chips. This condition is called "chip packing" and in many cases it leads to an automatic abort of the machine tool due to the higher power consumption. The parts, cut while chip packing was present, are commonly damaged and cannot be used in most cases. Chip packing can also damage the cutting edges of the blades and may even result in blade breakages.

In wet cutting, chip packing can be reduced or even eliminated by pointing a sharp stream of cutting oil radially to the cutter head in order to flush the chips away before they can accumulate and cause chip packing. In dry cutting attempts have been made to blow chips away using compressed air. The cost of compressed shop air is high and an air stream usually exceeds the acceptable noise level of a machine and cutting process and, therefore, is a negative aspect for the work environment. The water contained in compressed air significantly contributes to the rusting of parts and may also cause a temperature shock on the cutting blade edges which leads to micro cracks in the hot carbide blades. Furthermore, the kinetic energy of compressed air with a line pressure of 4 bar is a magnitude below a sharp oil stream with a pump pressure of 4 bar and a pump volume of 160 liters per minute, which is the another reason compressed air is not an effective solution to avoid chip packing.

US 6,311,580 and US 5,662,514 each disclose a cutter head according to the preamble of claim 1 and a cutting blade according to the preamble of claim 6.

## Summary of the Invention

The present invention is directed to a manner of reducing or eliminating chip packing in gear cutting tools, especially in bevel gear cutting tools. The invention provides a cutter head according to claim 1 and a cutting blade according to claim 6. The back surfaces of at least some cutting blades are modified by the introduction of a rake angled surface and/or a hook angled surface thereby resulting in an opening-up of the gap between successive cutting blades in a direction radially or axially away from the cutting tool. Such an opening-up facilitates the removal of chips from between the cutting blades as the cutting tool rotates during cutting.

## Brief Description of the Drawings

Figure 1 illustrates a face mill cutting process for gear manufacture wherein the cutting tool comprises alternating inside and outside cutting blades.

Figure 2 illustrates a face mill cutting process for gear manufacture wherein the cutting tool comprises successive cutting blades that each cut the full profile of a tooth slot.

Figure 3 illustrates a face hobbing process for gear manufacture wherein the cutting tool comprises groups of inside and outside cutting blades wherein each successive group cuts a respective successive tooth slot of a gear.

Figure 4 shows the prior-art enlargement of chip gap volume by blade "stick-out" as a manner to alleviate chip packing.

Figure 5 shows the prior-art approach of eliminating every other cutting blade in a cutter head to alleviate chip packing.

Figure 6 shows the prior-art approach of reducing blade thickness to widen the chip gap in order to alleviate chip packing.

Figure 7 shows the prior-art approach of changing the spacing between certain blades to widen the chip gap in order to alleviate chip packing.

Figure 8 is a top view of a portion of a typical face milling tool showing the arrangement of inside and outside cutting blades.

Figure 9 is a top view of a portion of a face milling tool of the present invention showing a first inventive embodiment comprising a modification to the back surface of an inside cutting blade.

Figure 10 is a peripheral view of a portion of a face milling tool of the present invention showing a second inventive embodiment comprising a modification to the back surface of an inside cutting blade.

Figure 11 is a perspective view of the back of a cutting blade illustrating the inventive embodiments of the present invention.

## Detailed Description of the Preferred Embodiment

The present invention will be discussed in detail with reference to the accompanying drawing Figures which are intended to represent the invention by way of example only.

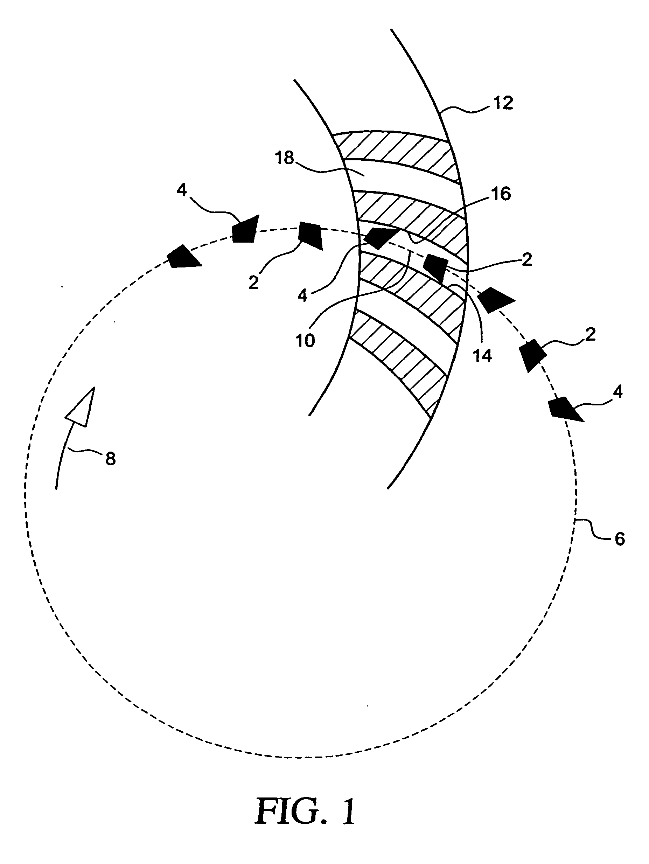

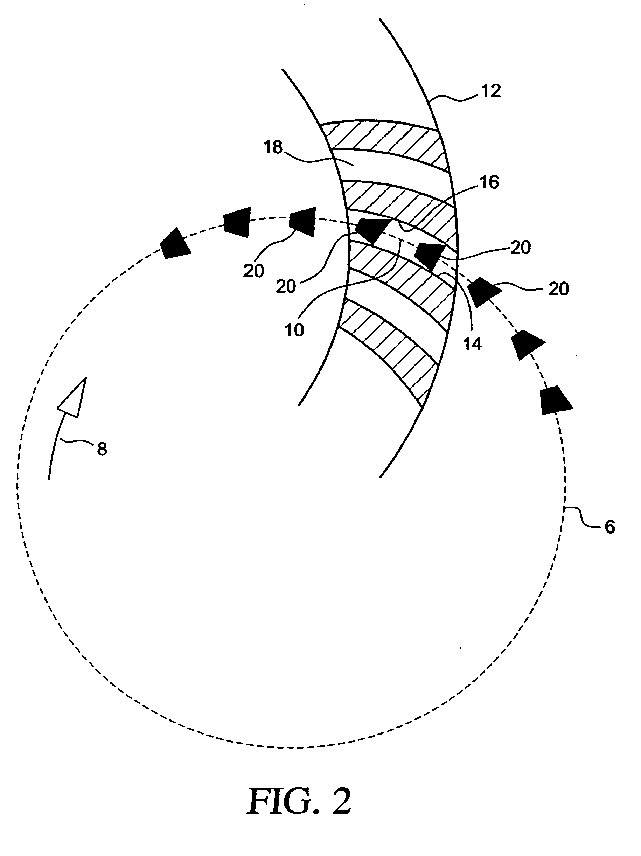

Figures 1 and 2 generally illustrate the face milling process for manufacturing bevel gears. In the context of the present invention, the term "bevel" gears is understood to be of sufficient scope to include those types of gears known as bevel gears, "hypoid" gears, as well as those gears known as "crown" or "face" gears.

Figure 1 represents an alternating blade type face milling cutter comprising inside cutting blades 2 and outside cutting blades 4 arranged in line with one another (e.g. on circle 6) on a cutter head (not shown). For illustrative purposes, only a portion of the total number of cutting blades 2, 4 are shown. The cutting blades 2, 4 are rotated in the direction of arrow 8 to form a tooth slot 10 of a work piece represented at 12. Inside cutting blades 2 cut the respective inside flank surface 14 of the tooth slot 10 while outside cutting blades 4 cut the respective outside flank surface 16 of the tooth slot 10. All cutting blades 2, 4 of the cutter pass through a single slot of the workpiece during cutter rotation. The cutting blades 2, 4 are fed in, relative to the work piece 12, until a final tooth slot depth is reached. The cutter is then withdrawn, the work piece is indexed to the position of another tooth slot (18 for example), and cutting is resumed. This sequence is repeated until all tooth slots of the workpiece have been formed.

Figure 2 illustrates another face milling cutting blade arrangement comprising successive cutting blades 20 arranged in line with one another (e.g. on circle 6) wherein each cutting blade 20 cuts both sides 14, 16 of the tooth slot 10. For illustrative purposes, only a portion of the total number of cutting blades 20 are shown. As with the alternating blade arrangement of Figure 1, all cutting blades 20 of the cutter pass through a single slot of the workpiece during cutter rotation. The cutting blades 20 are fed in, relative to the work piece, until a final tooth slot depth is reached. The cutter is then withdrawn, the work piece is indexed to the position of another tooth slot (18 for example), and cutting is resumed. This sequence is repeated until all tooth slots of the workpiece have been formed.

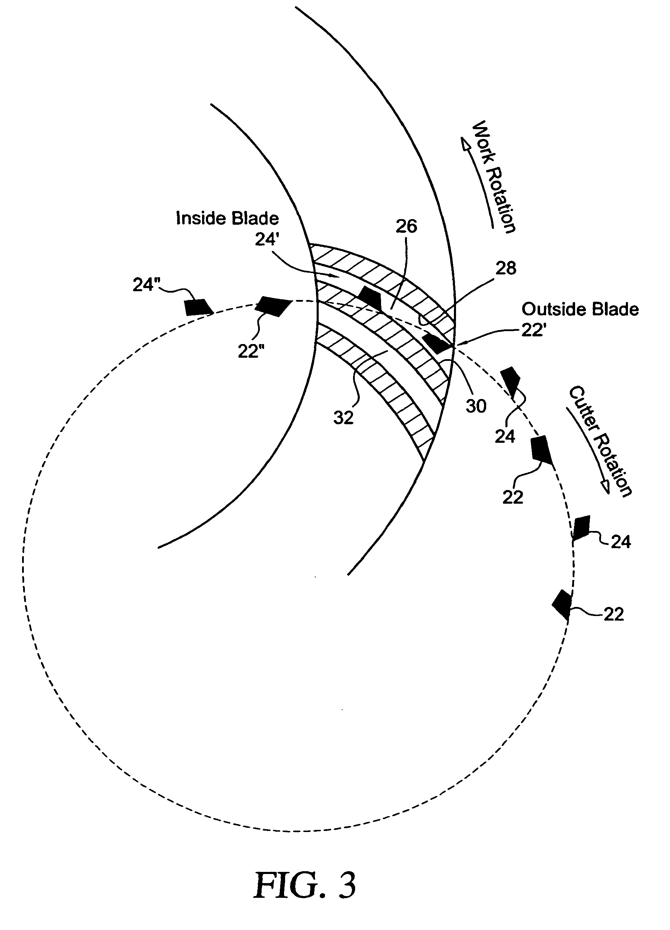

Figure 3 illustrates the face hobbing method of gear manufacture. Face hobbing comprises cutting blades arranged about a cutter, not in line with each other, but in groups, with usually two or three cutting blades per group. In Figure 3, two cutting blades per group (outside cutting blade 22 and inside cutting blade 24) are shown. For illustrative purposes, only a portion of the total number of cutting blade groups (i.e. cutting blades 22, 24) are shown. Unlike most face milling processes, in which all cutting blades pass through a tooth slot during its formation, face hobbing comprises each successive group of cutting blades 22, 24 passing through respective successive tooth slots with each blade in the group forming a cut completely along the longitudinal portion of the tooth slot. In Figure 3, for example, the group of cutting blades 22' and 24' cut respective outside surface 28 and inside surface 30 of tooth slot 26 while the successive group of cutting blades 22" and 24" cut corresponding surfaces in the next tooth slot 32. The cutter and the workpiece rotate in a timed relationship with each other thereby allowing continual indexing of the workpiece and continual formation of each tooth slot of the gear. Thus, in face hobbing, a single plunge of the cutting tool results in all tooth slots of the workpiece being formed.

In the production of bevel gears, the above described types of face milling tools and face hobbing tools are commonly employed in generating processes and non-generating processes. In generating processes for face milling (intermittent indexing), a rotating tool is fed into the workpiece to a predetermined depth. Once this depth is reached, the tool and workpiece are then rolled together in a predetermined relative rolling motion, known as the generating roll, as though the workpiece were rotating in mesh with a theoretical generating gear, the teeth of the theoretical generating gear being represented by the stock removing surfaces of the tool. The profile shape of the tooth is formed by relative motion of the tool and workpiece during the generating roll. The tool is then withdrawn, the work piece indexed to the next tooth slot position, and the process is repeated until all teeth are formed. In generating face hobbing (continuous indexing) processes, the tool and workpiece rotate in a timed relationship and the tool is fed to depth thereby forming all tooth slots in a single plunge of the tool. After full depth is reached, the generating roll is commenced.

Non-generating processes, either intermittent indexing or continuous indexing, are those in which the profile shape of a tooth on a workpiece is produced directly from the profile shape on the tool. The tool is fed into the workpiece and the profile shape on the tool is imparted to the workpiece. While no generating roll is employed, the concept of a theoretical generating gear in the form of a theoretical "crown gear" is applicable in non-generating processes. The crown gear is that theoretical gear whose tooth surfaces are complementary with the tooth surfaces of the workpiece in non-generating processes. Therefore, the cutting blades on the tool represent the teeth of the theoretical crown gear when forming the tooth surfaces on the non-generated workpiece.

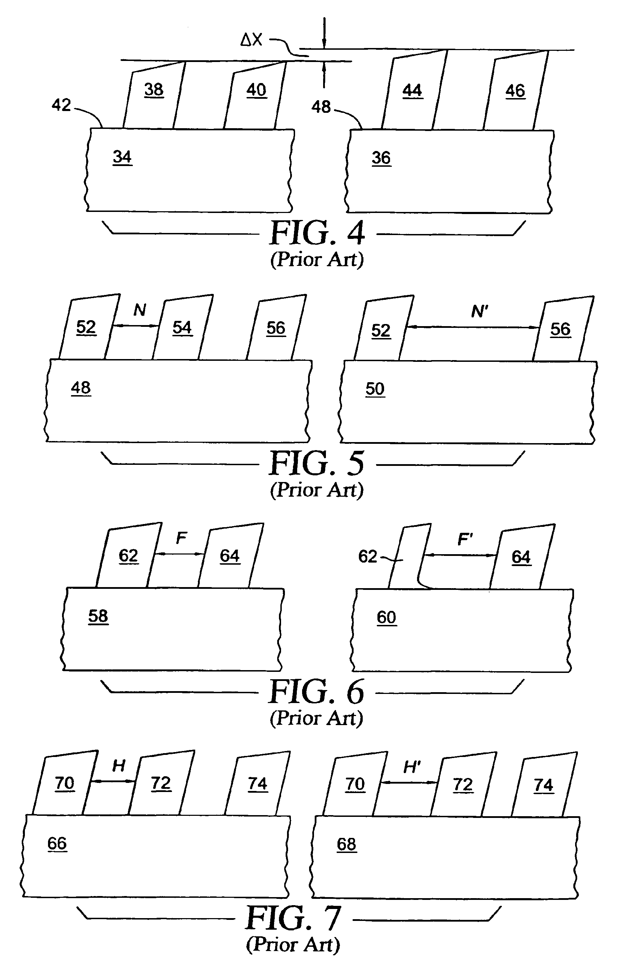

As mentioned above, previous efforts to reduce or eliminate chip packing between cutting blades include flushing with oil or blowing of air. Other attempted remedies include increased blade stick-out as seen in Figure 4 where a peripheral view of two cutter head sections 34, 36 is shown. Cutter head section 34 contains two blades 38, 40 having a certain stick-out distance above the face 42 of the head. The stick-out is defined by the depth of the gears to be cut and the size of the cutter head in order to avoid interference between the face of the cutter and the gear blank. The blades 44, 46 in cutter head section 36 have a larger stick-out by an amount $\Delta X$, which increases the volume of the chip gap. However, a larger stick-out will weaken the arrangement between cutter head and blades which can lead to vibration and chatter during the cutting operation.

Figure 5 shows a peripheral view of two cutter head sections 48, 50. Cutter head section 48 contains three blades 52, 54, 56 where the blades have a distance N between them. In order to increase the distance (i.e. the gap) from N to N', every other blade can be eliminated as shown in cutter head section 50. This, in turn, will reduce the productivity of the cutting process by 50%. Removing every other blade can only be realized in the case of all identical full profile blades. It is possible, in case of alternating inside and outside blades, to remove every other blade group. Since chip packing occurs primarily in front of outside blades, the inside blade and the outside blade in front of an outside blade has to be removed to achieve to wanted effect. Removing every other blade or blade group is not possible in face hobbing cutter heads if the number of blade groups is odd.

In a manner similar to Figure 5, cutter heads with lower number of blade slots have been utilized. Doing so, however, requires special cutter heads which offset the economical advantages of high speed cutting.

Figure 6 shows a peripheral view of two cutter head sections 58, 60. Cutter head section 58 contains two blades 62, 64 with a certain distance F. In order to increase to volume of the chip gap between cutting blades 62 and 64, the front face distance of the blades (preferably the outside blades) can be increased by reducing the blade thickness. As shown in cutter head section 60, a reduction in the thickness of blade 62 enlarges the volume of the chip gap to F'. However, the grinding time required to increase the front face distance is higher and the blade is weakened by this modification. The weaker blade is more likely to vibrate and may cause chatter in the cutting process.

Figure 7 shows a peripheral view of two cutter head sections 66, 68. Cutter head section 66 contains three blades 70, 72, 74 with a certain distance H. In order to increase to volume of the chip gap, the blade spacing can be modified such that the chip gap volume in front of an outside blade 70 is increased to H' as shown in the graphic to the right. This modification requires special cutter head designs and it is not possible for face hobbing because of the changed time relationship between inside and outside blades and the gear teeth.

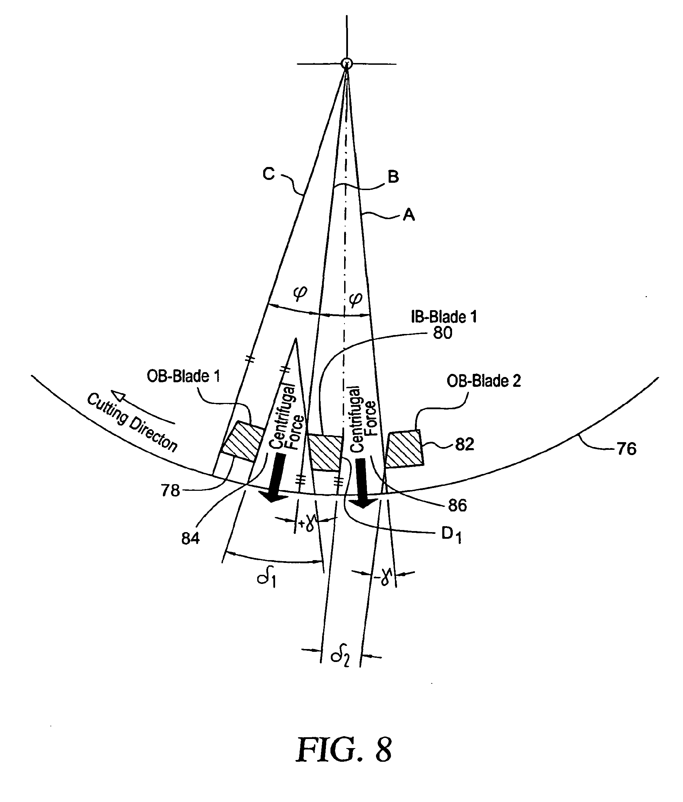

The inventors observed during gear cutting that chip packing primarily occurred in front of outside cutting blades especially in face milling processes. Inside cutting blades have a front side rake angle which provides a tapered gap, where the gap opens towards the outside (Figure 8, $\delta_1$). Conversely, outside blades have a side rake angle which provides a parallel or tapered gap, where the gap closes towards the outside (Figure 8, $\delta_2$). The centrifugal force acts on the chips radially toward the outside of a cutter head caused by the high RPM of the cutter head during a cutting process. The centrifugal force may be, depending on the cutter RPM, about 50 to 100 times higher than the gravitation force "g". The chips from an outside blade cutting curl and move towards the center of the cutter head which has the effect that chips with a certain length (depending on the length of a slot) cannot be thrown to the outside but get wedged in between the cutting blades due to the gap taper (Figure 8, $\delta_2$).

Figure 8 shows the top view of a portion of the face of a face mill cutter head 76 having equally spaces blades (spacing angle $\varphi$): outside blade 78, inside blade 80, and outside blade 82. In Figure 5 lines A, B and C are the blades spacing lines. The theoretical reference front faces of outside blade 78 (OB-1), inside blade 80 (IB-1) and outside blade 82 (OB-2) are exactly in the positions of the blade spacing lines. The front side rake angle -$\gamma$ makes outside blades sharp on the outside and the +$\gamma$ front side rake angle makes the inside blades sharp on the inside. The theoretical (and most of the actual) back surfaces of cutting blades are parallel to the theoretical front of the blades and therefore also to the respective spacing line. The angle $\delta_1$ is the relative angle between the front of blade IB-1 and the back of blade OB-1. The angle $\delta_1$ opens the chip gap 84 to the outside. The angle $\delta_2$ is the relative angle between the front of blade OB-2 and the back of blade IB-1. The angle $\delta_2$ effectively closes the chip gap 86 to the outside. $\delta$ is calculated as follows:

$$\delta = \varphi + \gamma \qquad\qquad (1)$$

for example: $\delta_1$ = 11.25° + 12° = 23.25°
or $\delta_2$=11.25°-12° =-0.75°
The centrifugal force direction in the center of the gaps 84, 86 is shown by the arrow. It is applied to the chips in a gap due to the rotation of the cutter 76.

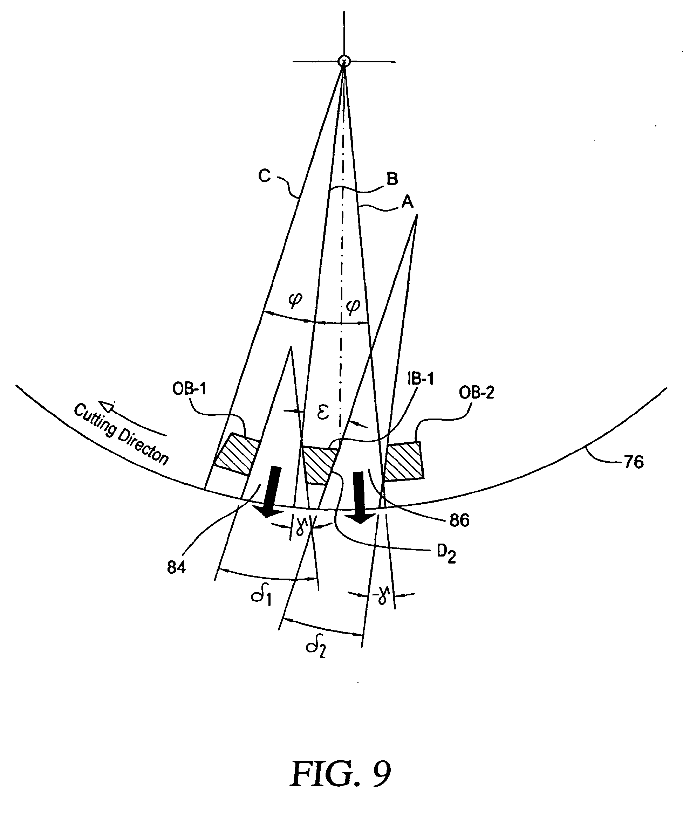

Figure 9 shows the same cutter lay out as in Figure 8 but with a modification of the back face D1 of the IB-1 blade in Figure 8. Back face D2 in Figure 9 is no longer parallel to the spacing line B but has an inclination of $\varepsilon$. $\delta_2$ is now calculated as:

$$\delta = \varphi + \gamma + \varepsilon \qquad\qquad (2)$$

or, for example: $\delta_2$ = 11.25° - 12° + 12° = 11.25°
The modified back face of the inside blade will therefore provide a positive angle $\delta_2$ which opens the gap 86 in front of the OB-2 blade to the outside of the cutter head 76, in the direction the centrifugal force acts.

The inventive tool uses a gap design which is flow optimized in the direction of the centrifugal force. This optimization is especially beneficial for the gap in front of outside blades. The inventive solution avoids (or reduces) a weakening of the cutting blades while realizing an optimization of the chip flow towards the outside of the cutter head. The solution is a modification to at least the back side of the inside blades (surface $D_1$ in Figure 8), which form the front end of the gaps (86 in Figure 8) which are in front of the outside blades (OB-2 in Figure 8). The modification is a side rake angle E on the back surface large enough to offset the net effect of the side rake angle and the spacing angle on the front of outside blades (-$\delta$ in Figure 9). Therefore, it is preferable to achieve a positive value for $\delta_2$.

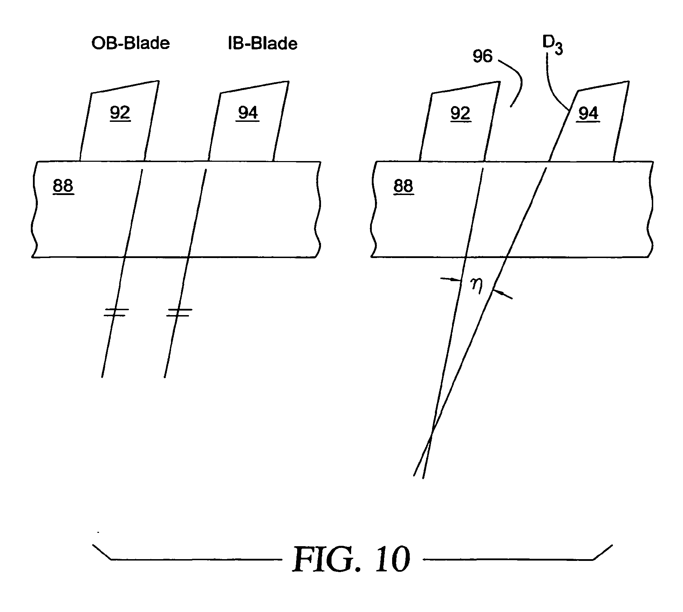

Figure 10 shows the peripheral view of two cutter head sections 88, 90. Cutter head section 88 contains two blades 92, 94 where the distance between the blades is about parallel along the axial blade direction. Cutter head section 90 shows a modification to the back side $D_3$ of inside cutting blade 94 (angle $\eta$). This second modification provides a tapered shape of the gap 96 opening in the axial blade direction so that chips can leave the gap 96.

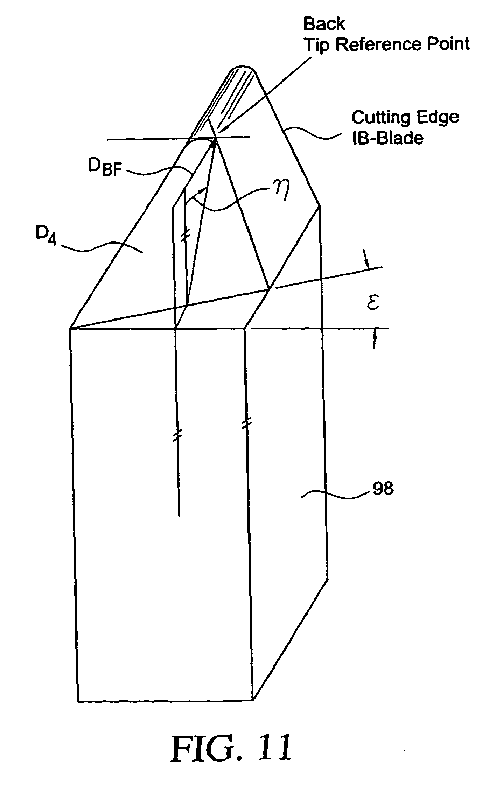

Figure 11 shows a three dimensional view to the back side $D_4$ of an inside stick or bar blade 98. In order to realize the inventive modifications, three parameters are defined. $\varepsilon$ is the back side rake angle, $\eta$ is the back hook angle and $D_{BF}$ is the back face distance.

A preferred embodiment is a back side rake angle of 12° or at least 3° larger than the outside blade front side rake angle. This will form chip gaps between the back side of inside blades and the front of outside blades which are tapered to the outside to allow the centrifugal force to throw the chips off. The form of the inventive chip gap will also, due to the cutter rotation and the Coriolis acceleration, guide the chip to the outside of the cutter.

An additional embodiment of the inventive tool design is an angular inclination of the inside blade back face (back hook angle) which will achieve a gap opening in axial blade direction away from the face of the cutter. The preferred embodiment uses such a hook angle between 3° and 8°.

The embodiment of the side rake angle formation on the back surface of a cutting blade and the embodiment of the angular inclination of the back surface of a cutting blade may be utilized separately from one another or in conjunction with one another.

The inventive back face of inside blades can be defined with three parameters:

- Back face distance $D_{FB}$;
- Back rake angle $\varepsilon$;
- Back hook angle $\eta$.

Additionally, curved or higher order surfaces may be introduced in order to optimize the chip flow effect.

While the inventive embodiments are preferably applied (alone or in combination) to the back surfaces of inside cutting blades of face mill cutters, the invention is not limited thereto. The inventive embodiments are likewise applicable to the back surfaces of the inside cutting blades of face hobbing cutters as well as to the back surfaces of outside cutting blades of face milling and face hobbing cutters in order to further widen the respective blade gaps. Additionally, the inventive back surface embodiments are also equally applicable to those blades which simultaneously cut both sides of a tooth slot (e.g. as shown in Figure 2).

Although the present invention has been discussed with reference to gear cutting blades that are positioned in and project from the face of a cutter head, such cutting blades being commonly referred to as stick or bar type blades, the present inventive concept likewise extends to other cutting blade arrangements where chip packing occurs or is likely to occur. Examples include those cutting blades known as form-relieved blades which usually project away from the front face of a cutter head or cutting blades which project radially away from the peripheral surface of a cutter head. The present invention is also equally applicable cutting operations other than gear cutting such as other metal milling operations where tools having a plurality of successively arranged cutting blades are employed.

While the invention has been described with reference to preferred embodiments it is to be understood that the invention is not limited to the particulars thereof. The present invention is intended to include modifications within the scope of the appended claims.

**Claims**

1. A cutter head having a first cutting blade (80; 94) and a successive second cutting blade (82; 92), said first cutting blade comprising:

   a front face oriented with a front side rake angle ($\gamma$) with respect to a theoretical reference line (B) and a back face, **characterized in that** said back face (D1; D3) is oriented
   non-parallel and inclined with a back side rake angle ($\varepsilon$) with respect to said theoretical reference line thereby resulting in an opening-up of the gap (86) to the successive second cutting blade in a direction radially away from the cutter head
   and/or oriented
   non-parallel and inclined with a back hook angle ($\eta$) with respect to the front face of the successive second cutting blade of the cutter head when seen in a peripheral view, thereby resulting in an opening-up of the gap (96) to the successive second cutting blade in a direction axially away from the cutter head.

2. The cutter head of claim 1, said first cutting blade being an inside cutting blade.

3. The cutter head of claim 1, said first cutting blade being an outside cutting blade.

4. The cutter head of claim 2, wherein the back side rake angle ($\varepsilon$) is at least 3° larger than the front side rake angle of the successive second cutting blade being an outside cutting blade.

5. The cutter head of any of claims 1 to 4, wherein the back hook angle ($\eta$) is between 3° and 8°.

**6.** A cutting blade (98) positionable in a cutter head, in particular in a cutter head being configured according to any of claims 1 to 5, said cutting blade having a length comprising a shank portion and a cutting end portion formed on at least one end of the shank portion, said shank portion including a front surface and a back surface and said cutting end portion including a front face having at least one cutting edge and a back face (D4),
**characterized in that** said back face is, with respect to the back surface of the shank portion, modified to be oriented, at a back side rake angle ($\varepsilon$), as seen in a plane orthogonal to the length direction,
and/or
at a back hook angle ($\eta$), as seen in the length direction.

**7.** The cutting blade of claim 6, wherein the back hook angle ($\eta$) is between 3° and 8°.

**8.** A cutting tool comprising a cutter head having an axis of rotation and a plurality of cutting blades (78, 80, 82) positioned in and arranged about said cutter head with a cutting end portion of each of said cutting blades projecting from a surface of said cutter head, said cutter head being configured according to any of claims 1 to 5 and/or said cutting blades being configured according to any of claims 6 or 7.

**9.** The cutting tool of claim 8, wherein said plurality of cutting blades are arranged about said axis of rotation and comprise alternating inside cutting blades and outside cutting blades, the back side of each inside cutting blade being oriented at said back side rake angle ($\varepsilon$).

**10.** The cutting tool of claim 9, wherein the back face of an inside cutting blade and the front face of a successive outside cutting blade form, as seen in a top view on the cutter head, an angle ($\delta_2$), that has a positive value.

**11.** The cutting tool of claim 9 or 10, wherein the front face of said outside cutting blades are oriented at a front side rake angle,
said back side rake angle ($\varepsilon$) of an inside cutting blade being larger than the front side rake angle of a successive outside cutting blade.

**12.** The cutting tool of claim 9, wherein also the back face of each outside cutting blade is oriented at a back side rake angle.

**13.** The cutting tool according to any of claims 8 to 12, wherein the back side rake angle ($\varepsilon$) of an inside cutting blade is at least 3° larger than the front side rake angle ($\gamma$) of a successive outside cutting blade.

**Patentansprüche**

**1.** Schneidkopf mit einem ersten Schneidmesser (80; 94) und einem nachfolgenden zweiten Schneidmesser (82; 92), wobei das erste Schneidmesser umfasst:

eine Vorderseite, die mit einem vorderen Seitenspanwinkel ($\gamma$) in Bezug auf eine theoretische Bezugslinie (B) ausgerichtet ist, und eine Rückseite,
**dadurch gekennzeichnet, dass** die Rückseite (D1; D3) ausgerichtet ist
nicht-parallel und geneigt mit einem hinteren Seitenspanwinkel ($\varepsilon$) in Bezug auf die theoretische Bezugslinie, wodurch sich eine Auföffnung des Spalts (86) zum nachfolgenden zweiten Schneidmesser in einer vom Schneidkopf radial wegführenden Richtung ergibt,
und / oder ausgerichtet ist
nicht-parallel und geneigt mit einem hinteren Hakenwinkel ($\eta$) in Bezug auf die Vorderseite des nachfolgenden zweiten Schneidmessers des Schneidkopfes, in Peripheriedarstellung betrachtet, wodurch sich eine Auföffnung des Spalts (96) zum nachfolgenden zweiten Schneidmesser in einer vom Schneidkopf axial wegführenden Richtung ergibt.

**2.** Schneidkopf nach Anspruch 1, wobei das erste Schneidmesser ein Innenschneidmesser ist.

**3.** Schneidkopf nach Anspruch 1, wobei das erste Schneidmesser ein Außenschneidmesser ist.

**4.** Schneidkopf nach Anspruch 2, wobei der hintere Seitenspanwinkel ($\varepsilon$) wenigstens 3° größer ist als der vordere Seitenspanwinkel des nachfolgenden zweiten Schneidmessers, das ein Außenschneidmesser ist.

**5.** Schneidkopf nach einem der Ansprüche 1 bis 4, wobei der hintere Hakenwinkel ($\eta$) zwischen 3° und 8° beträgt.

**6.** Schneidmesser (98), das in einem Schneidkopf positionierbar ist, insbesondere in einem Schneidkopf, der nach einem der Ansprüche 1 bis 5 ausgebildet ist, wobei das Schneidmesser eine Länge aufweist, die einen Schaftabschnitt und einen schneidenden Endabschnitt umfasst, der auf zumindest einem Ende des Schaftabschnitts geformt ist, wobei der Schaftabschnitt eine Vorderfläche und eine Rückfläche beinhaltet und der schneidende Endabschnitt eine Vorderseite mit zumindest einer Schneide und eine Rückseite (D4) beinhaltet,
**dadurch gekennzeichnet, dass** die Rückseite, in Bezug auf die Rückfläche des Schaftabschnitts, abgewandelt ist zwecks Ausrichtung,
an einem hinteren Seitenspanwinkel ($\varepsilon$), bei Betrachtung in einer zur Längenrichtung orthogonalen Ebene, und / oder
an einem hinteren Hakenwinkel ($\eta$), bei Betrachtung in der Längenrichtung.

**7.** Schneidmesser nach Anspruch 6, wobei der hintere Hakenwinkel ($\eta$) zwischen 3° und 8° beträgt.

**8.** Schneidwerkzeug, das einen Schneidkopf mit einer Rotationsachse und einer Mehrzahl von Schneidmessern (78, 80, 82) umfasst, die im Schneidkopf positioniert sind und um diesen angeordnet sind, wobei ein schneidender Endabschnitt jedes der Schneidmesser aus einer Fläche des Schneidkopfes ragt, wobei der Schneidkopf nach einem der Ansprüche 1 bis 5 ausgebildet ist und / oder die Schneidmesser nach Anspruch 6 oder 7 ausgebildet sind.

**9.** Schneidwerkzeug nach Anspruch 8, wobei die Mehrzahl von Schneidmessern um die Rotationsachse angeordnet ist und sich abwechselnde Innenschneidmesser und Außenschneidmesser umfasst, wobei die rückwärtige Seite jedes Innenschneidmessers am hinteren Seitenspanwinkel ($\varepsilon$) ausgerichtet ist.

**10.** Schneidwerkzeug nach Anspruch 9, wobei die Rückseite eines Innenschneidmessers und die Vorderseite eines nachfolgenden Außenschneidmessers, bei Draufsicht auf den Schneidkopf, einen Winkel ($\delta_2$) bilden, der einen positiven Wert aufweist.

**11.** Schneidwerkzeug nach Anspruch 9 oder 10, wobei die Vorderseite der Außenschneidmesser an einem vorderen Seitenspanwinkel ausgerichtet ist,
wobei der hintere Seitenspanwinkel ($\varepsilon$) eines Innenschneidmessers größer ist als der vordere Seitenspanwinkel eines nachfolgenden Außenschneidmessers.

**12.** Schneidwerkzeug nach Anspruch 9, wobei weiterhin die Rückseite jedes Außenschneidmessers an einem hinteren Seitenspanwinkel ausgerichtet ist.

**13.** Schneidwerkzeug nach einem der Ansprüche 8 bis 12, wobei der hintere Seitenspanwinkel ($\varepsilon$) eines Innenschneidmessers wenigstens 3° größer ist als der vordere Seitenspanwinkel ($\gamma$) eines nachfolgenden Außenschneidmessers.

**Revendications**

**1.** Tête de coupe possédant une première lame de coupe (80 ; 94) et une seconde lame de coupe (82 ; 92) successive, ladite première lame de coupe comprenant :

une face avant orientée en présentant un angle de coupe de côté avant ($\gamma$) par rapport à une ligne de référence théorique (B) et une face arrière,
**caractérisée en ce que** ladite face arrière (D1 ; D3) est orientée
de manière non parallèle et inclinée en présentant un angle de coupe de côté arrière ($\varepsilon$) par rapport à ladite ligne de référence théorique, produisant ainsi une ouverture de l'écartement (86) par rapport à la seconde lame de coupe successive dans un sens radialement écarté de la tête de coupe
et/ou orientée
de manière non parallèle et inclinée en présentant un angle de dégagement arrière ($\eta$) par rapport à la face avant de la seconde lame de coupe successive de la tête de coupe, selon une vue périphérique, produisant ainsi une ouverture de l'écartement (96) par rapport à la seconde lame de coupe successive dans un sens axialement écarté de la tête de coupe.

**2.** Tête de coupe selon la revendication 1, ladite première lame de coupe étant une lame de coupe intérieure.

**3.** Tête de coupe selon la revendication 1, ladite première lame de coupe étant une lame de coupe extérieure.

**4.** Tête de coupe selon la revendication 2, dans laquelle l'angle de coupe de côté arrière ($\varepsilon$) est d'au moins 3° plus grand que l'angle de coupe de côté avant de la seconde lame de coupe successive, celle-ci étant une lame de coupe extérieure.

**5.** Tête de coupe selon l'une quelconque des revendications 1 à 4, dans laquelle l'angle de dégagement arrière ($\eta$) est compris entre 3° et 8°.

**6.** Lame de coupe (98) pouvant être disposée dans une tête de coupe, notamment dans une tête de coupe configurée selon l'une quelconque des revendications 1 à 5, ladite lame de coupe présentant une longueur comprenant une partie de tige et une partie terminale de coupe constituée sur au moins une extrémité de la partie de tige, ladite partie de tige comportant une surface avant et une surface arrière et ladite partie terminale de coupe comportant une face avant présentant au moins une arête tranchante et une face arrière (D4),
**caractérisée en ce que** ladite face arrière, par rapport à la surface arrière de la partie de tige, est modifiée pour être orientée
selon un angle de coupe de côté arrière ($\varepsilon$), vu dans un plan orthogonal au sens de la longueur,
et/ou
selon un angle de dégagement arrière ($\eta$), vu dans le sens de la longueur.

**7.** Lame de coupe selon la revendication 6, dans laquelle l'angle de dégagement arrière ($\eta$) est compris entre 3° et 8°.

**8.** Outil de taillage comprenant une tête de coupe possédant un axe de rotation et une pluralité de lames de coupe (78, 80, 82) disposées dans ladite tête de coupe en étant agencées sur le pourtour de celle-ci, une partie terminale de coupe de chacune desdites lames de coupe faisant saillie à partir d'une surface de ladite tête de coupe, ladite tête de coupe étant configurée selon l'une quelconque des revendications 1 à 5 et/ou lesdites lames de coupe étant configurées selon l'une quelconque des revendications 6 ou 7.

**9.** Outil de taillage selon la revendication 8, dans lequel ladite pluralité de lames de coupe est agencée autour dudit axe de rotation et comprend une alternance de lames de coupe intérieures et extérieures, le côté arrière de chaque lame de coupe intérieure étant orienté selon ledit angle de coupe de côté arrière ($\varepsilon$).

**10.** Outil de taillage selon la revendication 9, dans lequel la face arrière d'une lame de coupe intérieure et la face avant d'une lame de coupe extérieure successive forment, vues par le dessus de la tête de coupe, un angle ($\delta_2$) présentant une valeur positive.

**11.** Outil de taillage selon la revendication 9 ou 10, dans lequel la face avant desdites lames de coupe extérieures est orientée selon un angle de coupe de côté avant,
ledit angle de coupe de côté arrière ($\varepsilon$) d'une lame de coupe intérieure étant plus grand que l'angle de coupe de côté avant d'une lame de coupe extérieure successive.

**12.** Outil de taillage selon la revendication 9, dans lequel la face arrière de chaque lame de coupe extérieure est également orientée selon un angle de coupe de côté arrière.

**13.** Outil de taillage selon l'une quelconque des revendications 8 à 12, dans lequel l'angle de coupe de côté arrière ($\varepsilon$) d'une lame de coupe intérieure est d'au moins 3° plus grand que l'angle de coupe de côté avant ($\gamma$) d'une lame de coupe extérieure successive.

**FIG. 1**

*FIG. 2*

FIG. 3

ΔX

38    40    44    46

42    48

34    36

FIG. 4
(Prior Art)

52  N  54    56    52  N'  56

48    50

FIG. 5
(Prior Art)

62  F  64    62  F'  64

58    60

FIG. 6
(Prior Art)

70  H  72    74    70  H'  72    74

66    68

FIG. 7
(Prior Art)

FIG. 8

FIG. 9

OB-Blade    IB-Blade

92    94    88    96    D₃    92    94    88

η

FIG. 10

Back
Tip Reference Point

Cutting Edge
IB-Blade

$D_{BF}$

$\eta$

$D_4$

$\varepsilon$

98

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 92861107 P
- US 1236834 A, Gleason
- US 1667299 A, Wildhaber
- US 20070011855 A, Ribbeck
- US 4575285 A, Blakesley
- US 4621954 A, Kitchen
- US 4525108 A, Krenzer
- US 3760476 A, Kotthaus
- US 6311580 B
- US 5662514 A